**Europäisches Patentamt**

**European Patent Office**

**Office européen des brevets**

(11) Veröffentlichungsnummer: **0 511 520 A1**

# (12) EUROPÄISCHE PATENTANMELDUNG

(21) Anmeldenummer: **92105871.5**

(22) Anmeldetag: **04.04.92**

(51) Int. Cl.5: **C08F 291/00**

(30) Priorität: **27.04.91 DE 4113839**

(43) Veröffentlichungstag der Anmeldung:
**04.11.92 Patentblatt 92/45**

(84) Benannte Vertragsstaaten:
**AT BE CH DE ES FR GB IT LI NL SE**

(71) Anmelder: **BASF Aktiengesellschaft**
**Carl-Bosch-Strasse 38**
**W-6700 Ludwigshafen(DE)**

(72) Erfinder: **Bankowsky, Heinz-Hilmar**
**Otto-Dill-Strasse 1c**
**W-6710 Frankenthal(DE)**
Erfinder: **Rau, Maria Gyopar, Dr.**
**Kaiserslauterer Strasse 36**
**W-6702 Bad Duerkheim(DE)**
Erfinder: **Schumacher, Karl-Heinz, Dr.**
**Wolfskeule 12**
**W-6730 Neustadt(DE)**

(54) **Verfahren zur Herstellung einer emulgatorfreien Polymerdispersion.**

(57) Verfahren zur Herstellung einer emulgatorfreien Polymerdispersion durch Polymerisation von radikalisch polymerisierbaren, ethylenisch ungesättigten Monomeren (A) mit Hilfe von Radikalstartern in wäßrigen Medium, das ein Polymer (B) enthält, dadurch gekennzeichnet, daß man die Monomeren (A) während der Polymerisation dem wäßrigen Medium zudosiert, so hergestellte Dispersionen und ihre Verwendung als wäßrige Beschichtungsmasse und als wäßriger Papierlack.

EP 0 511 520 A1

Die Erfindung betrifft ein Verfahren zur Herstellung einer emulgatorfreien Polymerdispersion durch Polymerisation von radikalisch polymerisierbaren, ethylenisch ungesättigten Monomeren (A) mit Hilfe von Radikalstartern in wäßrigem Medium, das ein Polymer (B) enthält. Außerdem betrifft die Erfindung die so hergestellten Polymerdispersionen sowie ihre Verwendung als wäßrige Beschichtungsmasse oder Papierlack.

Wäßrige Polymerdispersionen oder Latices werden üblicherweise nach Verfahren hergestellt, bei denen Emulgatoren eine Stabilisierung der Polymerteilchen bewirken. Diese Emulgatoren bedingen aber einige Nachteile hinsichtlich der Herstellung und Anwendung solcher Dispersionen. So tritt sowohl bei der Herstellung als auch bei der Verarbeitung der Dispersionen eine unerwünschte Schaumbildung auf. Weiterhin verursachen die Emulgatoren häufig eine störende Klebrigkeit des aus den Dispersionen gewonnenen Polymerfilms und sind auch oft für die geringe Wasserbeständigkeit des Films verantwortlich. Toxikologische und ökologische Kriterien tragen ebenfalls mit dazu bei, nach wäßrigen Dispersionen zu suchen, die ohne derartige Hilfsstoffe auskommen.

In Anstrich- und Lackformulierungen wird die stabilisierende Wirkung der Emulgatoren häufig durch unerwünschte Wechselwirkungen mit den Formulierungsmitteln (Filmbildehilfsmittel, Füllstoffe, Pigmente, ionogene Harze, Wachse) vermindert, was zu einer deutlichen Verschlechterung der anwendungstechnischen Eigenschaften (z.B. Glanz, Lagerstabilität, Verlauf) führen kann. Diese Stabilitätsprobleme ergeben sich insbesondere bei sehr feinteiligen Dispersionen mit einer entsprechend großen Gesamtteilchenoberfläche, bei denen erhebliche Emulgatormengen zugesetzt werden müssen, um einen für die Stabilisierung hinreichenden Bedeckungsgrad der Teilchenoberfläche mit Emulgator zu erzielen.

Um diese Probleme zu umgehen, wurden daher verschiedene Arbeiten durchgeführt mit dem Ziel, emulgatorfreie wäßrige Polymerdispersionen herzustellen.

So wird z.B. in US-A-4 151 143 ein zweistufiges Herstellverfahren für emulgatorfreie Dispersionen beschrieben, bei dem im ersten Schritt durch Lösungs- oder Substanzpolymerisation ein anionisches Polymer hergestellt wird. Nach dem Dispergieren dieses Polymeren in alkalisiertem Wasser werden dann in einer zweiten Stufe Mischungen aus bestimmten radikalisch polymerisierbaren Monomeren zugegeben und anschließend als batch-Ansatz in Gegenwart des Polymeren aus Stufe 1 polymerisiert. Die so hergestellten Dispersionen sollen als Komponente für Anstrichfarben Verwendung finden.

DE-A-31 23 598 beschreibt emulgatorfreie wäßrige Latices, die für anodisch abscheidbare Elektrotauchlacke verwendet werden. Auch diese Polymerdispersionen werden dadurch hergestellt, daß zunächst eine Mischung (batch) aus Monomeren und einem carboxylierten Polymer hergestellt wird. Anschließend wird diese Mischung polymerisiert. Das geschieht unter anderem in der Weise, daß die Mischung aus Monomeren und carboxyliertem Polymer als Emulsion in erhitztes Wasser geleitet wird, wobei der Polymerisationsinitiator gleichzeitig eingeleitet wird.

Solche im batch-Verfahren hergestellten Latices lassen sich nicht für wäßrige Papierlacke einsetzen, da in vielen Fällen keine lagerstabilen Lacke erhältlich sind oder der Glanz nicht ausreicht. Darüber hinaus weisen die Latices häufig sehr viele Stippen und einen hohen Koagulatanteil auf.

In US-A 4 465 803 wird ein ähnliches batch-Verfahren zur Herstellung von emulgatorfreien Latices beschrieben. Dabei werden radikalisch polymerisierbare Monomere in wäßrigem Medium zu gezielt funktionalisierten Polymeren gegeben. Anschließend wird die Mischung polymerisiert. Die erhaltenen Latices haben den Nachteil, daß sie nur eingeschränkt anwendbar sind. So weisen Papierlacke aus solchen emulgatorfreien Latices häufig ungünstige Glanzwerte auf.

Der vorliegenden Erfindung lag daher die Aufgabe zugrunde, ein Verfahren zur Herstellung wäßriger, emulgatorfreier Polymerdispersionen bereitzustellen, die die Nachteile des Standes der Technik nicht haben und für Beschichtungen und Papierlacke hoher Qualität einsetzbar sind.

Demgemäß wurde das oben definierte Verfahren gefunden, das dadurch gekennzeichnet ist, daß man die Monomeren (A) während der Polymerisation dem wäßrigen Medium zudosiert.

Weiterhin wurden die so hergestellten Polymerdispersionen sowie ihre Verwendung als wäßrige Beschichtungsmassen oder Papierlack gefunden.

Bevorzugte Ausführungsformen der Erfindung sind den Unteransprüchen zu entnehmen.

Emulgatoren sind bekanntermaßen amplihile Moleküle, d.h. Tenside, die im wesentlichen aus einem hydrophilen Molekülteil und einem hydrophoben Molekülteil bestehen. Als hydrophiler Molekülteil kommen Polyethylenoxidketten mit mindestens 5 Ethylenoxideinheiten, Amine, Ammoniumgruppen, -COOR-Gruppen, -$SO_3$R-Gruppen oder -$OSO_3$R-Gruppen, wobei R ein Äquivalent eines Kations oder Wasserstoff ist, in Frage. Ein hydrophober Molekülteil ist beispielsweise eine langkettige Alkylgruppe, eine Alkaryl- oder Aralkylgruppe mit 8 bis 30 C-Atomen oder eine Arylgruppe. In seltenen Fällen können Emulgatoren bis zu 3 hydrophile und/oder bis zu 3 hydrophobe Molekülteile aufweisen. Emulgatorfrei im Sinne dieser Erfindung bedeutet, daß vor oder während der Polymerisation der Monomeren (A) keine Emulgatoren zugesetzt werden. Das schließt natürlich nicht aus, daß Spuren von Emulgatoren, üblicherweise weniger als 0,01 Gew.-%, bezogen auf die Summe aus (A) und (B), durch andere Ausgangsstoffe eingeschleppt werden können. Emulgatoren in diesen geringen Mengen haben jedoch keine schädlichen Wirkungen.

Als Komponente (A) der erfindungsgemäßen Polymerdispersionen eignen sich prinzipiell alle radikalisch polymerisierbaren ethylenisch ungesättigten Monomere.

Besonders kommen Monomere mit einer Wasserlöslichkeit von bis zu 50 g/l bei 25°C sowie deren Kombinationen in Frage.

Beispiele für gut geeignete Monomere sind die Ester von $\alpha,\beta$-ungesättigten Monocarbonsäuren mit 3 bis 5 C-Atomen mit 1 bis 20 C-Atome enthaltenden Alkoholen wie die Acryl-, Methacryl- und Crotonsäureester, insbesondere mit aliphatischen oder cycloaliphatischen Alkoholen mit 1 bis 20 C-Atomen wie Methyl-, Ethyl-, n-Propyl-, i-Propyl-, n-Butyl-, i-Butyl-, t-Butyl-, Hexyl-, 2-Ethylhexyl-, Octyl-, Stearyl-, Cyclohexyl- und Methylcyclohexylalkohol. Aber auch die Ester der vorgenannten Säuren mit Benzylalkohol oder Phenol sind gut für diesen Zweck geeignet.

Ebenso eignen sich die Monoester von $\alpha,\beta$-monoolefinisch ungesättigten Monocarbonsäuren mit 3 bis 4 C-Atomen mit zweiwertigen gesättigten Alkoholen mit 3 bis 6 C-Atomen wie beispielsweise 2-Hydroxypropylmethacrylat, 4-Hydroxybutylmethacrylat oder 4-Hydroxybutylacrylat.

Glycidylester der Acryl- und Methacrylsäure wie z.B. Glycidylmethacrylat oder die Aminoalkylester der beiden genannten Säuren wie z.B. N,N-Diethylaminoethylacrylat, N,N-Dimethylaminoneopentylacrylat oder N,N-Dimethylaminoethylmethacrylat sind ebenfalls geeignet.

Weiterhin kommen in Frage Vinyl- und Allylester von 1 bis 20 C-Atome enthaltenden Carbonsäuren wie Allylacetat, Allylpropionat, Vinylformiat, Vinyllaurat, Vinylstearat und speziell Vinylpropionat und Vinylacetat.

Vinylether von 1 bis 8 C-Atome enthaltenden Alkoholen sind beispielsweise Vinylmethylether, Vinylethylether, Vinylisopropylether und Vinylbutylether.

Als vinylaromatische Monomere mit bis zu 20 C-Atomen kommen Vinyltoluol, $\alpha$- und para-Methylstyrol, $\alpha$-Butylstyrol, 4-n-Butylstyrol, 4-n-Decylstyrol und vorzugsweise Styrol in Betracht.

Die Vinylhalogenide sind mit Chlor, Fluor oder Brom substituierte ethylenisch ungesättigte Verbindungen, bevorzugt Vinylchlorid und Vinylidenchlorid.

Beispiele für Nitrile sind Acrylnitril und Methacrylnitril. Als Amide seien genannt Acrylamid und Methacrylamid.

Kohlenwasserstoffe mit einer polymerisierbaren olefinischen Doppelbindung sind Butadien, Isopren, aber auch Ethylen, Propylen oder Isobutylen.

In untergeordneten Mengen, beispielsweise 1 bis 10 Gew.-%, bezogen auf die eingesetzten Monomeren, können auch zur Vernetzung befähigte Monomere eingesetzt werden wie Butandioldiacrylat, Hexandioldiacrylat, Tripropylenglykoldiacrylat, Trimethylolpropantriacrylat oder -methacrylat.

Manchmal können in untergeordneten Mengen, z.B. bis zu 5 Gew.-%, bezogen auf die eingesetzten Monomeren, auch andere Hilfsmonomere wie Acrylsäure, Methacrylsäure, Maleinsäureanhydrid, Vinylcarbazol, 1-(Methacryloyloxiethyl)-imidazolidin-2-on und 1-(Acryloyloxiethyl)-imidazolidin-2-on (auch Ureido(meth)-acrylat genannt) eingesetzt werden, um den Polymerisaten bestimmte Eigenschaften zu verleihen.

Bevorzugt werden als Monomere Methylmethacrylat, Ethylmethacrylat, n-, i- und tert.-Butylacrylat, n- und tert.-Butylmethacrylat, n-Hexylacrylat, 2-Ethylhexylacrylat, n-Laurylacrylat, Styrol und ein Gemisch aus mindestens zweien dieser Monomeren, wie Mischungen aus 20 bis 80 Gew.-% Methylmethacrylat und 20 bis 80 Gew.-% n-Butylacrylat, jeweils bezogen auf die Mischung, und insbesondere Styrol selbst.

Die Komponente (B) der Polymerdispersion wird bevorzugt als wäßrige Lösung eingesetzt. Es handelt sich daher bevorzugt um ein an sich bekanntes wasserlösliches Polymer. Anders als Polymerdispersionen haben Polymerlösungen bei 25°C einen LD-Wert von mehr als 99 %. Der LD-Wert wird als Maß für die Lichtdurchlässigkeit einer wäßrigen Phase wird bei einer Verdünnung auf einen Feststoffgehalt von 0,01 Gew.-%, gemessen mit einem handelsüblichen Photometer (bei einer Wellenlänge von 0,546 $\mu$m) bei einer Schichtdicke von 25 mm relativ zu Wasser, dem willkürlich ein LD-Wert von 100 % zugeordnet wird, bestimmt.

Geeignet sind statistische Copolymere aus 5 bis 70 Gew.-%, insbesondere 40 bis 70 Gew.-% Styrol und 30 bis 95, insbesondere 30 bis 60 Gew.-% (Meth)acrylsäure mit üblicherweise einem gewichtsmittleren Molekulargewicht von 1000 bis 100000, vorzugsweise von 1000 bis 20000. Um eine ausreichende Wasserlöslichkeit zu sichern, werden diese Verbindungen mit Basen wie Ammoniak, Aminen oder Alkali bzw. Erdalkalihydroxiden partiell oder vollständig neutralisiert.

Auch Copolymerisate aus 40 bis 60 Gew.-% Maleinsäure und 60 bis 40 Gew.-% Diisobuten sowie Copolymerisate aus 5 bis 95 Gew.-% Maleinsäure mit 5 bis 95 Gew.-% (Meth)acrylsäure oder aus 50 bis 90 Gew.-% Maleinsäure mit 10 bis 50 Gew.-% Methylvinylether lassen sich vorteilhaft verwenden. Dabei liegen mittleren Molekulargewichte dieser Copolymerisate im allgemeinen zwischen 1000 und 200000.

Ebenso sind Copolymerisate aus 10 bis 50 Gew.-% (Meth)acrylamid und 50 bis 90 Gew.-% Vinylpyrolidon, deren Molmasse im Bereich von 5000 bis 200000 liegen kann, geeignet. Zur Erzielung einer günstigen Wasserlöslichkeit können auch diese Verbindungen mit den oben angeführten Basen partiell oder vollständig neutralisiert werden.

Auch Poly(meth)acrylsäuren oder Poly-2-acrylamido-2-methylpropansulfonsäuren, die bis zu 60 Gew.-%, bezogen auf das Polymer, Acryl- und Methacrylester von 1 bis 4 C-Atome enthaltenden Alkoholen, Acrylamid oder Methacrylamid einpolymerisiert enthalten können, mit im allgemeinen einem mittleren Molekulargewicht von 2000 bis 500000 sind geeignet. Zur Erzielung einer genügenden Wasserlöslichkeit können auch diese Polymere mit den oben angeführten Basen partiell oder vollständig neutralisiert sein.

Als Polymere B kommen weiterhin in Frage wasserlösliche Polyvinylpyrrolidone mit mittleren Molekulargewichten von üblicherweise 1000 bis 350000, Polyethylenoxide mit mittleren Molekulargewichten im allgemeinen von 2000 bis 100000, Poly(meth)acrylamide mit mittleren Molekulargewichten von üblicherweise 20000 bis 200000, zum Polyvinylalkohol teilverseifte Polyvinylacetate mit mittleren Molekulargewichten von üblicherweise 2000 bis 100000 sowie gegebenenfalls ethoxylierte Hydroxyalkylcellulose mit 1 bis 3 C-Atomen im Alkylrest mit einem Ethoxylierungsgrad von bis zu 4 Ethylenoxideinheiten pro Anhydroglucoseeinheit in Betracht. Beispiele hierfür und Natrosol® 250 LR oder 250 L der Firma Hercules GmbH, Hamburg. Die Viskosität 2-prozentiger wäßriger Lösungen solcher Polymere bei 20°C (Typ-Viskosität) liegt im allgemeinen unter 350 mPas.

Bevorzugte Polymere sind die genannten Polyvinylpyrrolidone, Polyethylenoxide, Poly-2-acrylamido-2-methyl-propansulfonsäuren mit bis zu 5, bevorzugt 0 Gew.-% einpolymerisierten Comonomeren, Polyacrylamide und insbesondere die Copolymerisate aus Styrol und Acrylsäure, wobei besonders gute Erfolge erzielt werden mit solchen Copolymeren, die aus 55 bis 65 Gew.-% Styrol und 35 bis 45 Gew.-% Acrylsäure aufgebaut sind und ein mittleres Molekulargewicht von 1000 bis 5000 haben.

Diese Polymeren sind dem Fachmann wohlbekannt und im Handel erhältlich, weshalb auf eine nähere Beschreibung verzichtet werden kann.

Das erfindungsgemäße Polymerisationsverfahren wird im wäßrigen Medium bevorzugt ohne Zusatz von organischen Lösungsmitteln in einer Zulauffahrweise durchgeführt. Unter organischen Lösungsmitteln werden solche verstanden, die bei der Polymerisation der Monomeren A inert sind. Dabei werden 10 bis 95, bevorzugt 45 bis 90 Gew.-% der Monomeren A und 5 bis 90 Gew.-%, bevorzugt 10 bis 55 Gew.-% des Polymeren B, jeweils bezogen auf die Gesamtmenge aus A und B, eingesetzt.

Die Monomeren werden im allgemeinen bei pH-Werten von 3 bis 11 und bei Reaktionstemperaturen von 20 bis 95, vorzugsweise von 40 bis 90°C radikalisch polymerisiert. Man verwendet als Radikalstarter für die radikalische Polymerisation im allgemeinen 0,1 bis 5 Gew.-%, bezogen auf die eingesetzten Monomeren, an üblichen, wasserlöslichen Initiatoren für die Emulsionspolymerisation. Diese Starter, z.B. Wasserstoffperoxid, Natriumperoxodisulfat oder Ammoniumperoxodisulfat, können alleine oder in bekannter Weise mit geringen Mengen wie 0,001 bis 0,1 Gew.-%, bezogen auf die eingesetzten Monomeren an Reduktionsmitteln wie Ascorbinsäure, Natriumpyrosulfit, Rongalit® der BASF AG, Thioharnstoff oder Hydrazin oder Schwermetallsalzen wie den Sulfaten oder Halogeniden des Eisens, Kobalts, Nickels, Titans oder Vanadins eingesetzt werden.

Darüberhinaus lassen sich zur Regulierung des Molekulargewichtes die üblicherweise verwendeten Regler einsetzen wie n-Dodecylmercaptan, t-Dodecylmercaptan, Thioglycol und Thioglycerin. Diese Stoffe werden im allgemeinen in Mengen von 0,1 bis 2 Gew.-%, bezogen auf die eingesetzten Monomeren zugesetzt.

In dem erfindungsgemäßen Zulaufverfahren werden in die wäßrige Vorlage das Polymere B bevorzugt als wäßrige Lösung und üblicherweise bis zu 60, bevorzugt 1 bis 50 und insbesondere 20 bis 40 Gew.-% des insgesamt verwendeten Radikalstarters gegeben. Gegebenenfalls können weitere bekannte Hilfsstoffe wie Puffersubstanzen oder Regler in üblichen Mengen zugesetzt werden. Das gegebenenfalls eingesetzte Reduktionsmittel kann zudosiert werden.

Nach Aufheizen auf die gewünschte Reaktionstemperatur werden in getrennten Zuläufen die restliche Menge an Radikalstarter und die Monomeren A in üblicher Weise zudosiert. Dabei benötigt man für die Komponente A 30 bis 300 Minuten, vorzugsweise 30 bis 180 Minuten und für die Restmenge an Radikalstarter 10 bis 60 Minuten, vorzugsweise 15 bis 40 Minuten mehr. Nach Beendigung der Zugabe des Polymerisationsstarters läßt man noch 30 bis 150 Minuten bei Reaktionstemperatur nachpolymerisieren.

Der Radikalstarter kann zudosiert oder in bevorzugter Weise teilweise vorgelegt werden. Die Menge des vorgelegten Initiators, die Zulaufgeschwindigkeit des Initiators und der Monomeren werden vorteilhafterweise so gewählt, daß keine Anreicherung von nicht-polymerisierten Monomeren im Reaktionsgefäß, beispielsweise über 1 Gew.-%, bezogen auf die Gesamtmenge der eingesetzten Monomeren hinaus, eintritt. Dies kann der Fachmann in einfacher Weise, beispielsweise durch Probennahme bzw. in Vorversuchen feststellen. Das Polymerisationsverfahren hat den Vorteil, daß die Reaktionswärme nicht stoßartig, sondern gleichmäßig in kontrollierter Weise entsteht und gut abgeführt werden kann. Dazu sind lediglich kleine Wärmetauscher erforderlich.

Man erhält Polymerdispersionen mit einem Feststoffgehalt von 15 bis 55 Gew.-%, insbesondere von 30 bis 50 Gew.-%, gemessen nach DIN 53189. Mit den bereits erwähnten anorganischen Basen, wie den Alkali- und Erdalkalimetallhydroxiden, Ammoniak oder organischen Basen wie Aminen lassen sich die wäßrigen emulgatorfreien Polymerdispersionen auf den gewünschten pH-Wert einstellen.

Der nach der Methode der dynamischen Lichtstreuung (gemäß B. J. Berne, R. Pecora, Dynamic Light Scattering, John Wiley & Sons, New York, 1976) bestimmte mittlere Teilchendurchmesser der Polymerdispersionen kann im Bereich von 20 nm bis 1000, insbesondere zwischen 40 und 1000 liegen.

Die mit dem erfindungsgemäßen Verfahren erhältlichen wäßrigen emulgatorfreien Polymerdispersionen sind lagerstabil und ohne weitere Behandlung versand- und gebrauchsfertig. Sie können ohne organische Lösungsmittel hergestellt werden. Sie eignen sich besonders gut für wäßrige Beschichtungsmassen und insbesondere als hochwertige wäßrige Papierlacke. In den Papierlacken bewirken sie eine sehr gute Lagerstabilität und verursachen einen außerordentlich hohen Glanz der aufgetragenen und getrockneten Papierlacke.

Wäßrige Beschichtungsmassen enthalten neben den Polymerdispersionen als Bindemittel, die im allgemeinen in Mengen von 25 bis 60 Gew.%, bezogen auf die wäßrige Beschichtungsmasse, vorliegen, häufig noch weitere übliche Komponenten, im allgemeinen 15 bis 25 Gew.% Pigmente wie $TiO_2$, 5 bis 25 Gew.% Füllstoffe eine Kreide oder Silicate, 0,1 bis 1 Gew.% Pigmentverteiler, 0,2 bis 1 Gew.% Entschäumer, 0,05 bis 0,2 Gew.% Konservierungsmittel und in Mengen bis zu etwa 10 Gew.% Filmbildehilfsmittel, Weichmacher und Verdicker.

Wäßrige Papierlacke können neben den Polymerdispersionen weitere übliche Komponenten enthalten. Genannt seien Filmbildehilfsmittel wie Propylenglykol und Butylglykol, Weichmacher wie Di-n-butylphthalat, Grenzflächenspannungsreglerwie Isopropanol und Wachse, jeweils in Mengen von üblicherweise 1 bis 10 Gew.-%, bezogen auf den wäßrigen Papierlack. Weiterhin können 10 bis 50 gew.-%ige wäßrige Lösungen der oben genannten Polymeren B wie die genannten Styrolacrylsäurecopolymere in Mengen von 10 bis 50 Gew.-% im wäßrigen Papierlack vorliegen.

Alle in den folgenden Beispielen angegebenen Prozente, Teile und Verhältnisse beziehen sich, wenn nicht anders angegeben, auf das Gewicht. Folgende Abkürzungen werden verwendet:

n-BA: n-Butylacrylat
i-BA: Isobutylacrylat
t-BA: t-Butylacrylat
n-HA: n-Hexylacrylat
2-EHA: 2-Ethylhexylacrylat
n-LA: n-Laurylacrylat
MMA: Methylmethacrylat
EMA: Ethylmethacrylat
n-BMA: n-Butylmethacrylat
t-BMA: t-Butylmethacrylat
S: Styrol
FG: Feststoffgehalt
M: gewichtsmittleres Molekulargewicht

Allgemeine Herstellvorschrift für die Beispiele 1 bis 20

In einem 3 l-Vierhalskolben, der mit Rückflußkühler, 2 Zulaufgefäßen, Thermometer, Pilot-Rührwerk sowie Gaseinlaß und -auslaß ausgestattet war, wurden die in der Tabelle 2 angegebene Menge einer 22,5 %igen, ammoniakalischen Lösung (pH 10) eines Copolymeren B aus 60 Gew.-% Styrol und 40 Gew.-% Acrylsäure mit einem mittleren Molekulargewicht von 1200 vorgelegt und nach Spülung des Reaktionsgefäßes mit Stickstoff auf 85°C erhitzt. Man gab 54 g einer 1,5 %igen wäßrigen Ammoniumperoxodisulfatlösung hinzu und ließ dann bei 85°C unter Rühren während 1 h 220 g des Monomeren bzw. Monomerengemisches A zulaufen. Gleichzeitig wurden in einem separaten Zulauf 126 g einer 1,5 %igen Ammoniumperoxodisulfatlösung zugetropft, je doch wurde hier die Zutropfzeit um 30 Minuten auf insgesamt 1,5 h verlängert. Nach Beendigung der beiden Zuläufe ließ man noch 1 h bei 85°C reagieren und kühlte anschließend auf Raumtemperatur.

Die nach dieser Herstellvorschrift erhaltenen Polymerdispersionen sind koagulatfrei und durch folgende Daten charakterisiert:

5

Tabelle 2

| Beispiel | Monomere A | Losung des Copolymers B (g) | pH | FG (%) | Teilchdurchmesser (nm) |
|---|---|---|---|---|---|
| 1 | n-BA | 802 | 9,0 | 39,0 | 143 |
| 2 | i-BA | 391 | 8,7 | 38,7 | 113 |
| 3 | t-BA | 391 | 9,0 | 40,0 | 110 |
| 4 | n-HA | 391 | 8,9 | 39,6 | 127 |
| 5 | 2-EHA | 391 | 9,1 | 39,7 | 136 |
| 6 | n-LA | 391 | 9,0 | 39,9 | 193 |
| 7 | MMA | 802 | 9,6 | 39,7 | 96 |
| 8 | MMA | 978 | 9,6 | 41,6 | 75 |
| 9 | EMA | 391 | 9,0 | 39,4 | 77 |
| 10 | n-BMA | 802 | 8,6 | 39,6 | 78 |
| 11 | t-BMA | 391 | 9,2 | 39,9 | 51 |
| 12 | 50 % S, 50 % n-BA | 802 | 9,2 | 39,4 | 116 |
| 13 | 50 % MMA, 50 % n-BA | 802 | 9,1 | 39,6 | 131 |
| 14 | 50 % MMA, 50 % n-BA | 978 | 9,3 | 41,0 | 98 |
| 15 | 50 % MMA, 50 % n-BA | 182 | 9,2 | 42,9 | 140 |
| 16 | S | 978 | 9,1 | 45,7 | 97 |
| 17 | S | 802 | 9,0 | 45,3 | 100 |
| 18 | S | 684 | 9,0 | 45,4 | 105 |
| 29 | S | 489 | 8,9 | 44,9 | 111 |
| 20 | S | 400 | 8,9 | 40,6 | 135 |

Allgemeine Herstellvorschrift für die Beispiele 21 bis 33

In einem 3 l-Vierhalskolben, der mit Rückflußkühler, 2 Zulaufgefäßen, Thermometer, Pilot-Rührwerk sowie Gaseinlaß und -auslaß ausgestattet war, wurde die jeweils in der Tabelle 3 angegebene Menge der wäßrigen Lösung des Polymers B vorgelegt und nach Spülung des Reaktionsgefäßes mit Stickstoff auf 85°C erhitzt. Man gab 54 g einer 1,5 %igen wäßrigen Ammoniumperoxodisulfatlösung hinzu und ließ dann bei 85°C unter Rühren während 1 h 220 g Styrol zulaufen. Gleichzeitig wurden in einem separaten Zulauf 126 g einer 1,5 %igen Ammoniumperoxodisulfatlösung zugetropft, jedoch wurde hier die Zutropfzeit um 30 Minuten auf insgesamt 1,5 h verlängert. Nach Beendigung der beiden Zuläufe ließ man noch 1 h bei 85°C reagieren und kühlte anschließend auf Raumtemperatur.

Die nach dieser Herstellvorschrift erhaltenen Polymerdispersionen sind koagulatfrei und durch folgende Daten charakterisiert:

Tabelle 3

| Beispiel | Monomere B | eingesetzte Lösung des Polymers B | | erhaltene Dispersion | |
|---|---|---|---|---|---|
| | | Menge (g) | (%)[1] | FG (%) | Teilchendurch-messer ($\mu$m) |
| 21 | Copolymer 50 % Methylmethacrylat 35 % Methylacrylat 15 % Acrylsäure | 293 | 30 | 43,3 | 103 |
| 22 | Polyethylenoxid M = 9000 | 601 | 30 | 39,1 | 177 |
| 23 | Polyvinylpyrolidon M = 40000 | 733 | 30 | 40,0 | 130 |
| 24 | Poly-2-acrylamido-2-methylpropan-sulfonsäure, Na-Salz M = 42000 | 495 | 20 | 35,2 | 400 |

[1] Konzentration der Lösung

Tabelle 3 (Fortsetzung)

| Beispiel | Monomere B | eingesetzte Lösung des Polymers B | | erhaltene Dispersion | |
|---|---|---|---|---|---|
| | | Menge (g) | (%)[1] | FG (%) | Teilchendurch- messer ($\mu$m) |
| 25 | Copolymer aus 50 % Maleinsäure 50 % Diisobutylen Na-Salz M = 1200 | 600 | 30 | 39,1 | 250 |
| 26 | Copolymer aus 88 % Polyvinylalkohol 12 % Polyvinylacetat M = 26000 (Mowiol® 4/88 der Fa. Hoechst AG, Frankfurt) | 1000 | 11 | 23,9 | 1000 |
| 27 | Cellulose-hydroxy- ethylether mit 2,5 Ethylenoxid-Einheiten pro Anhydroglukose- einheit (Natrosol 250 LR) | 2000 | 5,5 | 13,9 | 183 |
| 28 | Polyacrylamid M = 120000 | 518 | 20 | 35,3 | 405 |
| 29 | Copolymer aus 70 % Vinylpyrrolidon 30 % Methacrylamid M = 100000 | 1100 | 10 | 21,3 | 395 |
| 30 | Copolymer aus 50 % Maleinsäure und 50 % Acrylsäure M = 3000 | 440 | 25 | 39,5 | 420 |
| 31 | Copolymer aus 30 % Maleinsäure und 70 % Acrylsäure Na-Salz M = 70000 | 470 | 23,5 | 32,0 | 465 |

[1] Konzentration der Lösung

Tabelle 3 (Fortsetzung)

| Beispiel | Monomere B | eingesetzte Lösung des Polymers B | | erhaltene Dispersion | |
| --- | --- | --- | --- | --- | --- |
| | | Menge (g) | (%)[1] | FG % | Teilchendurch- messer ($\mu$m) |
| 32 | Copolymer aus 67 % Maleinsäure und 33 % Methylvinylether M = 70000 | 440 | 25 | 39,0 | 1000 |
| 33 | Polyethylenoxid M = 6800 | 601 | 30 | 38,3 | 81 |

[1] Konzentration der Lösung

Allgemeine Vorschrift für die Beispiele 34 bis 36

Es wird wie bei den Beispielen 21 bis 33 gearbeitet, jedoch mit einem Gemisch aus 802 g einer 22,5 gew.-%igen wäßrigen Lösung des Ammoniumsalzes eines Copolymers aus 60 Gew.-% Styrol und 40 Gew.-% Acrylsäure (M = 1200) und 15 g einer 30 gew.-%igen wäßrigen Lösung eines Polyethylenoxids (M = 9000) als Polymer B und 220 g der in Tabelle 4 angegebenen Monomeren A bzw. des Monomergemisches A.

| Beispiel | Monomer A | Erhaltene Dispersion | |
| --- | --- | --- | --- |
| | | FG (%) | Teilchendurchmesser ($\mu$m) |
| 34 | MMA | 40,6 | 78 |
| 35 | 50 % MMA/50 % n-BA | 40,9 | 102 |
| 36 | S | 46,5 | 106 |

Vergleichsbeispiel 1

Gemäß dem batch-Herstellverfahren des Standes der Technik wurden 220 g eines statistischen Copolymerisates aus 60 % Styrol und 40 % Acrylsäure mit einem mittleren Molekulargewicht von 1200 in 758 g einer 3 %igen wäßrigen Ammoniaklösung gelöst. In diese Harzlösung wurden bei 85°C 220 g Styrol emulgiert. Dann tropfte man bei 85°C unter Rühren der Emulsion während 1 h 180 g einer 1,5 %igen Ammoniumperoxodisulfat-Lösung zu. Der Ansatz koagulierte während des Initiatorzulaufes vollständig.

Vergleichsbeispiel 2

Das Beispiel 15 in der Tabelle 2 wurde in Batch-Fahrweise (vgl. Vergleichsbeispiel 1) durchgeführt.
40,9 g der Copolymeren aus 60 % Styrol und 40 % Acrylsäure in 141 g einer 3 %igen wäßrigen Ammoniaklösung bildeten die Vorlage, in der 220 g Monomere, bestehend aus 110 g n-BA und 110 g MMA, emulgiert wurden.
Der Ansatz koagulierte während des Initiatorzulaufes.

Vergleichsbeispiel 3

Gemäß dem in DE-A-31 23 598 beschriebenen Zulauf-Herstellverfahren wurden 90 g eines statistischen Copolymerisates aus 60 % Styrol und 40 % Acrylsäure mit einem mittleren Molekulargewicht von 1200 in 210 g einer 4 %igen wäßrigen Ammoniaklösung gelöst. In dieser Lösung wurden 220 g Styrol bei Raumtemperatur emulgiert und dann die erhaltene Emulsion unter Rühren in eine auf 85°C erhitzte Wasservorlage (160 g) eingeleitet. Parallel dazu tropfte man während 1,5 h 100 g einer 1,5 %igen Ammoniumperoxodisulfat-Lösung in die auf 85°C erhitzte Vorlage. Nach Beendigung der Zuläufe ließ man noch 1 h bei 85°C nachpolymerisieren und erhielt eine feinteilige, bläulich weiße Dispersion mit einem Feststoffgehalt von 40 %. Die Dispersion enthielt 1,3 % Koagulat (bez. auf den Gesamtfeststoffgehalt) und zeigte, als Film aufgezogen auf eine Glasplatte, zahlreiche Stippen.

Bestimmung des Stippengehaltes:

Auf eine Glasplatte wurde die wäßrige Dispersion mit einer Schichtdicke von 200 $\mu$m aufgezogen und 24 Stunden bei Raumtemperatur getrocknet. Anschließend wurden die mit bloßem Auge sichtbaren Stippen auf einer Fläche von 6x20 cm visuell ausgewertet und einer Notenskala zugeordnet, die von Note 0 (stippenfrei) bis 3 (sehr viele Stippen) geht. Die folgende Tabelle zeigt die Ergebnisse:

| Beispiel Nr. | Note |
|---|---|
| 16 | 0 |
| 17 | 1 |
| 18 | 1-2 |
| 19 | 1 |
| 20 | 2 |
| Vgl.-Beispiel 3 | 3 |

Die folgenden Beispiele beschreiben Formulierungen für wäßrige Papierlacke unter Mitverwendung der emulgatorfreien Polymerdispersionen als Binder.

Für Papierlacke kann ein wasserlösliches Polymer als Cobinder eingesetzt werden. Als besonders gut geeignet hat sich ein Copolymer aus 55 bis 65 Gew.-% Styrol und 35 bis 45 Gew.-% Acrylsäure mit einem Molekulargewicht von 1000 bis 5000 herausgestellt, wobei in manchen Fällen bis zu 50 Gew.-% des Styrolanteils durch $\alpha$-Methylstyrol ersetzt sein kann. Ebenfalls geeignet sind die oben genannten wasserlöslichen Polyacryl- und Polymethacrylsäuren.

Allgemeine Vorschrift für die Formulierung I:

```
Gew.-Teile        Bestandteil
56a)              wäßrige Lösung eines Copolymers (35 %ig)
27                Polymerdispersion (FG = 45 %
 9                wäßrige Polyethylen-Wachs-Emulsion, 35 %ig als Hilfsmittel
                  zur Erhöhung der Kratzfestigkeit
 7b)              Wasser
 1                Entschäumer.
```

```
a): Lösung, bestehend aus

    Gew.-Teile        Bestandteil
    35                Copolymer aus 60 % Styrol und 40 % Acrylsäure
                      (M = 1200)
    13                konz. NH3
     3                Butylglykol als Filmbildehilfsmittel
    49                Wasser
```

```
b): bei Schwankungen im Polymergehalt der Dispersion wurde die Menge ent-
    sprechend angepaßt.
```

Die Einzelkomponenten wurden unter ständigem Rühren miteinander vermischt. Es war günstig, die Polymerdispersion und Wachs-Emulsion vorher zusammen anzusetzen, um Koagulation der Wachspartikel zu vermeiden.

Die Formulierung II verwendete erfindungsgemäße Dispersion als Alleinbindemittel. Von marktüblichen wäßrigen Dispersionen konnten nur noch wenige auf diese Art und Weise zu einem annehmbaren Papierlack verarbeitet werden.

Allgemeine Vorschrift für die Formulierung II:

| Gew.-Teile | Bestandteil |
|---|---|
| 74 | Polymerdispersion, FG = 45 |
| 4 | i-Propanol als Hilfsmittel zur Senkung der Granzflächenspannung |
| 2 | Propylenglykol als Filmbildehilfsmittel |
| 8 | Di-n-Butylphthalat als Weichmacher |
| 2 | Polyethylen-Wachs-Emulsion, 35 %ig als Hilfsmittel für höhere Kratzfestigkeit |
| 10 | Wasser |

Prüfung der Papierlacke

1. Viskosität: gemessen nach DIN 53211 mit DIN-Becher 4 mm bei 23°C, in Sekunden angegeben.
2. Lagerstabilität: Der Lack wurde bei 50°C im Trockenschrank in geschlossenem Gefäß gelagert. Es wurde geprüft, ob der Lack eindickte oder an Viskosität stark zunahm.

Prüfung der Papierlackierung

Der Lack wurde mit einem 6 μm Rakel auf Kontrastpapier weiß und schwarz und Karton aufgetragen und bei Raumtemperatur getrocknet. Der Glanz wurde mit einem Multi-gloss-Reflektometer bei einem Winkel von 60° gemessen.

Die Ergebnisse sind in den Tabellen 5 und 6 dargestellt.

Wie deutlich wird, sind die erfindungsgemäß hergestellten Dispersionen breit einsetzbar. So ergeben sie in vielen Rezepturen auf vielen Papieren als Papierlacke ein ausgewogenes Eigenschaftsprofil aus Lagerstabilität des wäßrigen Lackes und Oberflächeneigenschaften des getrockneten Lackes wie Glanz auf unterschiedlichen Substraten.

Tabelle 5

Papierlackformulierungen nach dem Formulierungsrezept I

| Dispersion | | 8 | 12 | 13 | 14 | 16 | 20 | 21 | 34 | 35 | 36 | vgl. Bsp. 3 |
|---|---|---|---|---|---|---|---|---|---|---|---|---|
| Visk. (DIN-4) n. 1d | | 53 | 49 | 50 | 51 | 41 | 28 | 34 | 52 | 48 | 42 | 35 |
| n. 7d | | 47 | 78 | 75 | 46 | 45 | 31 | 38 | 46 | 42 | 42 | n.b.[1] |
| Lagerstabilität (+50°C) | | <4d | 11d | 11d | >6d | 11d | 24h | 20d | <4d | >6d | 11d | 2h |
| Glanz | Karton | 31 | 43 | 41 | 37 | 38 | 39 | 46 | 32 | 35 | 36 | 38 |
| 60° | Papier (weiß) | 67 | 84 | 83 | 70 | 81 | 81 | 75 | 66 | 70 | 70 | 70 |
| 6 $\mu$m | Papier (schwarz) | 61 | 71 | 70 | 63 | 84 | 82 | 65 | 63 | 68 | 60 | 59 |

[1]  nicht bestimmbar mit DIN-Becher 4mm

EP 0 511 520 A1

Tabelle 6

Papierlackformulierungen nach dem Formulierungsrezept II

| Dispersion | 8 | 12 | 13 | 14 | 16 | 17 | 18 | 19 | 20 | 34 | 35 | 36 | Vgl. Bsp. 3 |
|---|---|---|---|---|---|---|---|---|---|---|---|---|---|
| Visk. (DIN-4) n. 1d | 113 | 26 | 28 | 64 | 65 | 25 | 19 | 20 | 14,5 | 91 | 45 | 30 | 19 |
| n. 7d | – | – | – | – | – | – | 19 | – | – | – | – | – | 19 |
| Lagerstabilität (+50°C) | >6d | >11d | >11d | >6d | >11d | >11d | 11d | 11d | >14d | >6d | >6d | 11d | 11d |
| Glanz Karton | 36 | 35 | 31 | 32 | 41 | 56 | 32 | 31 | 34 | 33 | 31 | 34 | 30 |
| 60° Papier (weiß) | 44 | 68 | 66 | 55 | 77 | 85 | 54 | 42 | 71 | 40 | 54 | 54 | 39 |
| 6 μm Papier (schwarz) | 64 | 69 | 67 | 60 | 81 | 73 | 70 | 74 | 80 | 61 | 57 | 64 | 55 |

Vergleichsbeispiel 4

Ausführungsbeispiel 5 der US-A 4 465 803 wurde nachgearbeitet. Mit dieser Dispersion als Binder wurde ein wäßriger Papierlack wie oben beschriebenen mit der Formulierung I hergestellt. Der Glanz ist in Tabelle 7 dargestellt.

13

Beispiel 37

Ausführungsbeispiel 5 der US-A 4 465 803 wurde nachgearbeitet. Jedoch wurden 207 g n-Butylmethacrylat und 0,5 g Ammoniumpersulfat vor dem Aufheizen auf 80°C nicht zugegeben und ebenso 100 g Wasser zurückbehalten. Nach Aufheizen der Vorlage wurden im Verlauf von 60 Minuten 207 g n-Butylmethacrylat und im Verlauf von 90 Minuten 0,5 g Ammoniumpersulfat gelöst in 100 g Wasser, kontinuierlich zudosiert und anschließend 1,5 Stunden bei der Temperatur gehalten.

Mit dieser Dispersion als Binder wurde ein wäßriger Papierlack wie oben beschrieben mit der Formulierung I hergestellt. Die Glanzwerte in Tabelle 7 zeigen die deutliche Überlegenheit der erfindungsgemäßen Dispersion gegenüber der im batch-Verfahren nach dem Stand der Technik hergestellten Dispersion.

Tabelle 7

| Papierlackformulierungen nach dem Formulierungsrezept I | | Vgl. Bsp. 4 | Dispersion 37 |
|---|---|---|---|
| Glanz | Karton | 23 | 31 |
| 60° | Papier (weiß) | 43 | 54 |
| 6μm | Papier (schwarz) | 51 | 59 |

**Patentansprüche**

1. Verfahren zur Herstellung einer emulgatorfreien Polymerdispersion durch Polymerisation von radikalisch polymerisierbaren, ethylenisch ungesättigten Monomeren (A) mit Hilfe von Radikalstartern in wäßrigem Medium, das ein Polymer (B) enthält, dadurch gekennzeichnet, daß man die Monomeren (A) während der Polymerisation dem wäßrigen Medium zudosiert.

2. Verfahren nach Anspruch 1, dadurch gekennzeichnet, daß man die Monomeren kontinuierlich zudosiert.

3. Verfahren nach den Ansprüchen 1 und 2, dadurch gekennzeichnet, daß man 5 bis 90 Gew.-% der Monomeren (A) und 10 bis 95 Gew.-% des Polymeren (B), jeweils bezogen auf die Summe von (A) und (B), einsetzt.

4. Verfahren nach den Ansprüchen 1 bis 3, dadurch gekennzeichnet, daß man den Radikalstarter während der Polymerisation zudosiert.

5. Verfahren nach den Ansprüchen 1 bis 3, dadurch gekennzeichnet, daß man bis zu 60 Gew.-% des eingesetzten Radikalstarters im wäßrigen Medium vorlegt und den Rest während der Polymerisation zudosiert.

6. Verfahren nach den Ansprüchen 1 bis 5, dadurch gekennzeichnet, daß man als Monomere (A) Ester 1 bis 20 C-Atome enthaltender Alkohole, Amide oder Nitrile von 3 bis 5 C-Atome enthaltenden Monocarbonsäuren, Vinylester und/oder Allylester von 1 bis 20 C-Atome enthaltenden Carbonsäuren, Vinylether von 1 bis 8 C-Atome enthaltenden Alkoholen, vinylaromatische Monomere mit bis zu 20 C-Atomen, Vinylhalogenide und/oder Kohlenwasserstoffe mit einer polymerisierbaren Doppelbindung einsetzt.

7. Verfahren nach den Ansprüchen 1 bis 6, dadurch gekennzeichnet, daß das Polymere (B) in dem wäßrigen Medium gelöst ist.

8. Emulgatorfreie Polymerdispersionen, herstellbar nach einem Verfahren gemäß den Ansprüchen 1 bis 7.

9. Verwendung der emulgatorfreien Polymerdispersion nach Anspruch 8 oder hergestellt nach den Ansprüchen 1 bis 7 als wäßrige Beschichtungsmasse.

10. Verwendung der emulgatorfreien Polymerdispersion nach Anspruch 8 oder hergestellt nach gemäß den Ansprüchen 1 bis 7 als wäßriger Papierlack.

**Patentansprüche für folgenden Vertragsstaat : ES**

1. Verfahren zur Herstellung einer emulgatorfreien Polymerdispersion durch Polymerisation von radikalisch polymerisierbaren, ethylenisch ungesättigten Monomeren (A) mit Hilfe von Radikalstartern in wäßrigem Medium, das ein Polymer (B) enthält, dadurch gekennzeichnet, daß man die Monomeren (A) während der Polymerisation dem wäßrigen Medium zudosiert.

2. Verfahren nach Anspruch 1, dadurch gekennzeichnet, daß man die Monomeren kontinuierlich zudosiert.

3. Verfahren nach den Ansprüchen 1 und 2, dadurch gekennzeichnet, daß man 5 bis 90 Gew.-% der Monomeren (A) und 10 bis 95 Gew.-% des Polymeren (B), jeweils bezogen auf die Summe von (A) und (B), einsetzt.

4. Verfahren nach den Ansprüchen 1 bis 3, dadurch gekennzeichnet, daß man den Radikalstarter während der Polymerisation zudosiert.

5. Verfahren nach den Ansprüchen 1 bis 3, dadurch gekennzeichnet, daß man bis zu 60 Gew.-% des eingesetzten Radikalstarters im wäßrigen Medium vorlegt und den Rest während der Polymerisation zudosiert.

6. Verfahren nach den Ansprüchen 1 bis 5, dadurch gekennzeichnet, daß man als Monomere (A) Ester 1 bis 20 C-Atome enthaltender Alkohole, Amide oder Nitrile von 3 bis 5 C-Atome enthaltenden Monocarbonsäuren, Vinylester und/oder Allylester von 1 bis 20 C-Atome enthaltenden Carbonsäuren, Vinylether von 1 bis 8 C-Atome enthaltenden Alkoholen, vinylaromatische Monomere mit bis zu 20 C-Atomen, Vinylhalogenide und/oder Kohlenwasserstoffe mit einer polymerisierbaren Doppelbindung einsetzt.

7. Verfahren nach den Ansprüchen 1 bis 6, dadurch gekennzeichnet, daß das Polymere (B) in dem wäßrigen Medium gelöst ist.

8. Verwendung der nach einem Verfahren gemäß den Ansprüchen 1 bis 7 erhältlichen Verfahrensprodukte als wäßrige Beschichtungsmasse.

9. Verwendung der nach einem Verfahren gemäß den Ansprüchen 1 bis 7 erhältlichen Verfahrensprodukte als wäßriger Papierlack.

Europäisches Patentamt

Nummer der Anmeldung

EP    92 10 5871

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 173 300 (NATIONAL STARCH AND CHEMICAL CORPORATION) * Ansprüche 1-2 * * Beispiel 1 * * Seite 4, Zeile 12 - Zeile 21 * --- | 1-8 | C08F291/00 |
| X | WORLD PATENTS INDEX LATEST Derwent Publications Ltd., London, GB; AN 86-323284 & JP-A-61 241 310 (SOKEN KAGAKU KK) 27. Oktober 1986 * Zusammenfassung * --- | 1-2,6 | |
| A | EP-A-0 308 115 (POLYVINYL CHEMIE HOLLAND BV) * Ansprüche * * Seite 5, Zeile 11 - Zeile 18 * * Seite 5, Zeile 28 - Zeile 31 * ----- | 1-8 | |

| RECHERCHIERTE SACHGEBIETE (Int. Cl.5) |
|---|
| C08F |

Der vorliegende Recherchenbericht wurde für alle Patentansprüche erstellt

| Recherchenort | Abschlußdatum der Recherche | Prüfer |
|---|---|---|
| DEN HAAG | 03 JULI 1992 | PERSSON E.K. |

EPO FORM 1503 03.82 (P0403)